# FASCICULE DE BREVET EUROPEEN

(11) **EP 0 916 055 B1**
(45) Date de publication et mention de la délivrance du brevet: **18.04.2001**
(21) Numéro de dépôt: 97936727.3
(22) Date de dépôt: 01.08.1997
(51) Int. Cl.: F16L 27/12, F16L 27/11

(54) **DISPOSITIF DE RACCORDEMENT BOUT A BOUT D'ELEMENTS DE CANALISATIONS ET DISPOSITIF D'ASSEMBLAGE DE CONDUITS INCORPORANT UN TEL DISPOSITIF DE RACCORDEMENT**
VORRICHTUNG ZUR STUMPFEN VERBINDUNG VON ROHRLEITUNGSELEMENTEN UND VORRICHTUNG ZUM ZUSAMMENBAU VON LEITUNGEN, DIE EINE SOLCHE VERBINDUNGSVORRICHTUNG MIT UMFASST
DEVICE FOR JUMP JOINTING PIPING ELEMENTS AND DEVICE FOR ASSEMBLING PIPES INCORPORATING SUCH A JOINTING DEVICE

(30) Priorité: 09.08.1996 FR 9610060
(43) Date de publication de la demande: 19.05.1999
(73) Titulaire: SAINT-GOBAIN PAM, 54000 Nancy (FR)
(72) Inventeur: BARBE, Pierre, F-54200 Bicqueley (FR)
(74) Mandataire: Puit, Thierry
(86) Numéro de dépôt international: FR9701439
(87) Numéro de publication internationale: WO9806968

(56) Documents cités:
- BE-A- 658 007
- DE-A- 3 544 712
- US-A- 4 054 306
- US-A- 4 350 372

## Description

La présente invention est relative à un dispositif de raccordement bout à bout d'éléments de canalisation et se rapporte également à un dispositif d'assemblage de conduits incorporant un tel dispositif de raccordement.

Les dispositifs de raccordement bout à bout de ce type comportent généralement un manchon de raccordement formé d'une enveloppe extérieure entourant les zones d'extrémité en regard des éléments de canalisation et dans laquelle sont ménagées des gorges annulaires intérieures de réception de joints d'étanchéité destinés à coopérer avec les extrémités correspondantes des éléments de canalisation à raccorder.

Le manchon est généralement réalisé en un matériau rigide emmanché à force sur les zones d'extrémité correspondantes des éléments de canalisation.

Ce type de dispositifs de raccordement présente de nombreux inconvénients, notamment en raison du fait qu'ils ne sont pas adaptés pour absorber les déplacements relatifs des éléments de canalisations qu'ils sont destinés à raccorder, notamment sous l'effet de la dilatation de ces éléments, qui sont dès lors soumis à des contraintes importantes.

On a tenté de pallier cet inconvénient en utilisant un manchon de raccordement élastiquement déformable fixé de façon étanche sur les zones d'extrémité en regard desdits éléments de canalisation pour absorber les déplacements relatifs de ces éléments.

On connaît aussi par le brevet belge BE-A-658007 un raccord souple pour extrémités de tuyauterie qui comporte coaxialement, entre deux pièces de raccordement, une gaine intérieure souple et une membrane plissée extérieure fixées aux deux raccords.
Toutefois, ces éléments sont sensibles à la pression régnant à l'intérieur de la canalisation et sont par conséquent susceptibles de se déformer et donc de créer une perte de charge relativement importante au niveau du raccordement.
L'invention vise à remédier aux inconvénients des dispositifs de raccordement connus en créant un dispositif de raccordement d'éléments de canalisation qui, tout en étant capable d'absorber les déplacements relatifs entre les éléments de canalisation, n'engendre pas de perte de charge sensible dans le fluide circulant dans ces éléments de canalisation, notamment en utilisant une chemise rigide de circulation du fluide qui s'articule à l'intérieur d'un manchon élastiquement déformable.

Elle a donc pour objet un dispositif de raccordement bout à bout d'éléments de canalisation ayant des déplacements relatifs selon au moins une direction, comprenant un manchon d'étanchéité en matière élastiquement déformable comportant un ensemble de soufflets destiné à être fixé de manière étanche sur les zones d'extrémité en regard desdits éléments de canalisation pour absorber leurs déplacements relatifs, caractérisé en ce qu'il comporte en outre une chemise réalisée en matériau rigide formant élément de conduite placée dans le manchon et dont les zones d'extrémité opposées sont montées chacune dans un élément de canalisation avec jeu d'absorption des déplacements relatifs desdits éléments de canalisation, ladite chemise comportant une partie intermédiaire s'étendant entre ses zones d'extrémité opposées et délimitant extérieurement une surface de soutien dudit manchon.

L'invention peut en outre comporter une ou plusieurs des caractéristiques suivantes :
- les zones d'extrémité de la chemise sont montées chacune axialement déplaçables dans un élément de canalisation correspondant, en vue de l'absorption des déplacements relatifs axiaux desdits éléments de canalisation ;
- les zones d'extrémité de la chemise sont montées chacune angulairement déplaçables dans un élément de canalisation correspondant, en vue de l'absorption des déplacements relatifs radiaux desdits éléments de canalisation ;
- au moins la zone d'extrémité amont de la chemise, en considérant le sens d'écoulement d'un produit fluide dans lesdits éléments de canalisation, a une forme évasée de guidage dudit fluide ;
- les extrémités libres de la chemise comportent chacune une surface externe tronconique de glissement sur la paroi interne d'un élément de canalisation correspondant ;
- les zones d'extrémité en regard des éléments de canalisation comportent chacune un alésage interne de réception d'une zone d'extrémité correspondante de la chemise ;
- la paroi de la partie intermédiaire de la chemise comporte une partie épaissie délimitant ladite surface de soutien dudit manchon ;
- la chemise est réalisée en un matériau rigide ; et
- le manchon comporte un soufflet d'absorption des déplacements relatifs desdits éléments de canalisation.

L'invention a également pour objet un dispositif d'assemblage bout à bout de conduits ayant des déplacements relatifs selon au moins une direction, ce dispositif formant un ensemble unitaire séparé destiné à être monté, par des moyens de fixation des zones d'extrémités opposées d'éléments de canalisation sur des extrémités en regard desdits conduits, caractérisé en ce qu'il comporte un dispositif de raccordement d'éléments de canalisation tels que définis ci-dessus.

L'invention sera mieux comprise à la lecture de la description suivante, donnée uniquement à titre d'exemple et faite en référence aux dessins annexés sur lesquels :
- la figure 1 est une vue en coupe longitudinale d'un dispositif de raccordement d'éléments de canalisation selon l'invention dans lequel les éléments de canalisation sont représentés dans une position dans laquelle ils présentent des déplacements relatifs axial et radial maximum ;
- la figure 2 montre le dispositif de la figure 1 dans une position dans laquelle les éléments de canalisation présentent un déplacement axial minimum et un déplacement radial maximum; et
- la figure 3 est une vue schématique en coupe d'un dispositif d'assemblage de conduits selon l'invention.

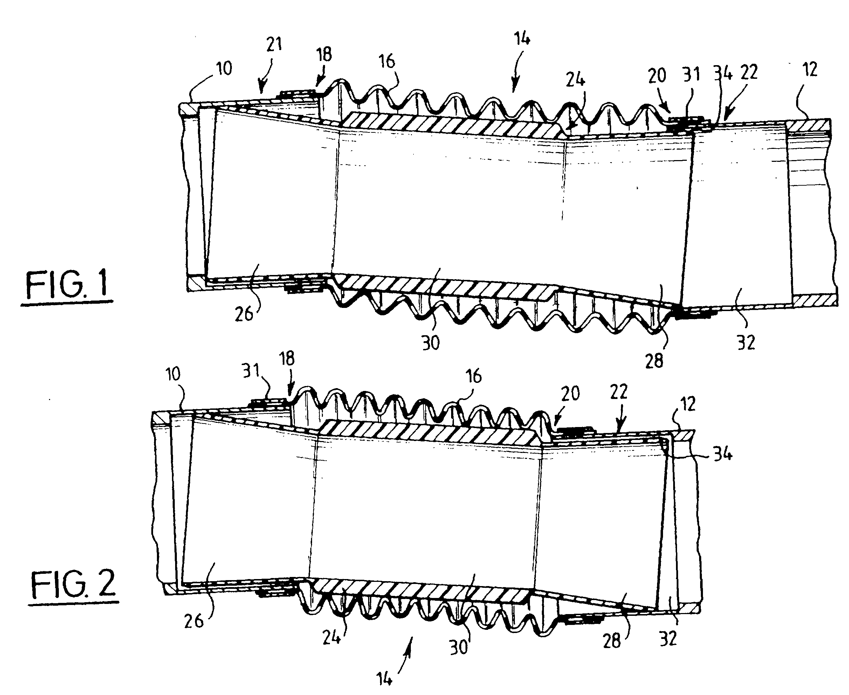

Sur la figure 1, on a représenté un tronçon de canalisation formé de deux éléments de tuyauterie 10, 12 raccordés par un dispositif de raccordement suivant l'invention, désigné par la référence numérique 14.

La canalisation à laquelle appartient le tronçon représenté sur cette figure est par exemple constituée par une canalisation d'un dispositif d'évacuation des eaux pluviales de la surface d'une toiture de bâtiment. Cette canalisation s'étend de façon classique entre la toiture et un équipement de récupération des eaux pluviales situé au niveau du sol.

De par sa constitution, et en particulier en raison de sa longueur relativement importante, la canalisation est susceptible de se déformer, notamment par dilatation, ce qui engendre des déplacements relatifs axial et radial des éléments de tuyauterie 10 et 12.

Pour absorber ces déplacements, le dispositif de raccordement 14 comporte un manchon 16 fixé par ses deux extrémités opposées 18 et 20 sur les zones d'extrémités en regard 21 et 22 des éléments de tuyauterie 10 et 12, ainsi qu'une chemise 24 placée dans le manchon et dont les zones d'extrémités opposées 26 et 28 sont montées avec jeu dans un élément de tuyauterie correspondant 10 et 12.

Le manchon 16 est réalisé en une matière élastiquement déformable, notamment en élastomère et comporte un ensemble de soufflets ménagés dans sa paroi constitutive entre les deux zones d'extrémités 18 et 20. Il est emmanché sur chaque zone d'extrémité 21 et 22 des éléments de tuyauterie 10 et 12 et fixé à ceux-ci aux moyens de colliers de serrage, tels que 31.

La chemise 24 est réalisée en une matière rigide, notamment en polyéthylène et comporte les deux zones d'extrémité 26 et 28 ainsi qu'une zone médiane 30 s'étendant entre ces zones d'extrémités 26 et 28.

Les zones d'extrémités 26 et 28 ont chacune une forme évasée tronconique de section régulièrement croissante en direction de leur extrémité libre et s'engage dans un alésage 32 ménage dans chaque élément de tuyauterie 10 et 12.

Le diamètre interne de chaque alésage 32 est légèrement supérieur au diamètre de la tranche d'extrémité correspondante de la chemise 24.

En outre, on voit sur les figures que les extrémités libres de la chemise comportent chacune une surface tronconique 34 délimitant une surface de glissement sur la paroi interne de l'alésage 32.

Par ailleurs, la partie intermédiaire 30 de la chemise 24 comporte une paroi épaissie dont la surface externe délimite une surface de soutien pour le manchon 16 et a une surface interne de forme générale cylindrique.

Comme cela a été mentionné précédemment, les éléments de canalisation 10 et 12 ont des déplacements relatifs selon plusieurs directions. Sur la figure 1 on a représenté les éléments de canalisation 10 et 12 dans une position correspondant aux déplacements relatifs axial et radial maximum et, sur la figure 2, les éléments de canalisation sont représentés dans une position correspondant au déplacement radial maximum et au déplacement axial minimum.

Au cours du déplacement des éléments de canalisation le manchon 16 se déforme de manière à compenser le déplacement de ces éléments 10, 12 et à conserver l'étanchéité du raccordement. De même, la chemise 24 se déplace dans les alésages 32 en fonction du déplacement axial et s'oriente en fonction du déplacement radial des éléments de canalisation 10 et 12.

Ainsi, et comme illustré sur la figure 2, lorsque les éléments de canalisation 10 et 12 sont dans une position rapprochée, le manchon 16 étant dès lors comprimé, celui-ci vient en appui sur la surface externe de la partie médiane de la chemise 24, ce qui permet ainsi de conserver au manchon 16 sa forme cylindrique.

En outre, en raison de la forme évasée de ses zones d'extrémités 26 et 28, et de la forme cylindrique de la surface interne de la partie médiane 30, la chemise 24 assure un guidage du fluide entre les éléments de canalisation 10 et 12 sans perte de charge significative.

On conçoit donc que quelle que soit la position relative des éléments de canalisation, l'étanchéité de l'assemblage est conservée, ceci sans engendrer de perte de charge dans le fluide.

Bien entendu, les dimensions du manchon 16 et de la chemise 24 sont adaptées pour absorber des déplacements prédéterminés en fonction des caractéristiques de la canalisation qu'ils équipent.

Dans l'exemple de réalisation qui vient d'être décrit, le montage du dispositif de raccordement s'effectue en ménageant des alésages cylindriques dans les zones d'extrémités en regard des éléments de canalisation à raccorder.

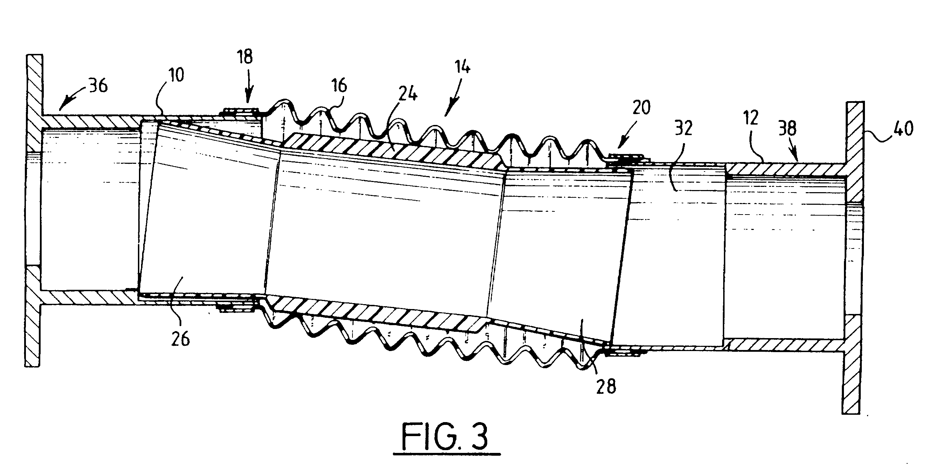

Il est toutefois possible de prévoir, comme représenté sur la figure 3, un tel dispositif formant un ensemble unitaire destiné à être fixé entre deux conduits à assembler.

Pour ce faire, on prévoit aux deux extrémités mutuellement opposées 36, 38 des éléments de canalisation 10 et 12 des moyens de fixation sur les extrémités en regard des conduits à assembler (non représenté).

Ces moyens de fixation peuvent être constitués par tous types de moyens de fixation appropriés pour l'utilisation envisagée, notamment des fixations par brides 40 , comme représenté sur la figure 3, ou par colliers.

Dans les modes de réalisation qui ont été décrits précédemment, les diamètres des éléments de canalisation raccordés au moyen du dispositif selon l'invention présente des diamètres égaux.

On conçoit que bien entendu ce dispositif peut également être appliqué au raccordement d'éléments de canalisation ayant des diamètres différents, en prévoyant un manchon et une chemise ayant des diamètres appropriés et différents au niveau de leur zone d'extrémité.

## Revendications

1. Dispositif de raccordement bout à bout d'éléments de canalisation (10, 12) ayant des déplacements relatifs selon au moins une direction, comprenant un manchon d'étanchéité (16) en matière élastiquement déformable comportant un ensemble de soufflets destiné à être fixé de manière étanche sur les zones d'extrémité (21, 22) en regard desdits éléments de canalisation (10, 12) pour absorber leurs déplacements relatifs, caractérisé en ce qu'il comporte en outre une chemise (24) réalisée en matériau rigide formant élément de conduite placée dans le manchon (16) et dont les zones d'extrémité opposées (26, 28) sont montées chacune dans un élément de canalisation (10, 12) avec jeu d'absorption des déplacements relatifs desdits éléments de canalisation, ladite chemise (24) comportant une partie intermédiaire (30) s'étendant entre ses zones d'extrémité (26, 28) et délimitant extérieurement une surface de soutien dudit manchon (16).

2. Dispositif de raccordement selon la revendication 1, caractérisé en ce que les zones d'extrémité opposées (26, 28) de la chemise (24) sont montées chacune axialement déplaçable dans un élément de canalisation (10, 12) correspondant, en vue de l'absorption des déplacements relatifs axiaux desdits éléments de canalisation (10, 12).

3. Dispositif de raccordement selon l'une des revendications 1 et 2, caractérisé en ce que les zones d'extrémité opposées (26, 28) de la chemise (24) sont montées chacune angulairement déplaçable dans un élément de canalisation (10, 12) correspondant, en vue de l'absorption des déplacements relatifs radiaux desdits éléments de canalisation (10, 12).

4. Dispositif de raccordement selon l'une quelconque des revendications précédentes, caractérisé en ce qu'au moins la zone d'extrémité amont de la chemise (24), en considérant le sens d'écoulement d'un produit fluide dans lesdits éléments de canalisation (10, 12), a une forme évasée de guidage dudit fluide.

5. Dispositif de raccordement selon l'une quelconque des revendications 1 à 4, caractérisé en ce que les extrémités opposées (26, 28) libres de la chemise (24) comportent chacune une surface externe tronconique (34) de glissement sur la paroi interne d'un élément de canalisation correspondant.

6. Dispositif de raccordement selon l'une quelconque des revendications 1 à 5, caractérisé en ce que les zones d'extrémité (21, 22) en regard des éléments de canalisation comportent chacune un alésage interne (32) de réception d'une zone d'extrémité opposée (26, 28) correspondante de la chemise (24).

7. Dispositif de raccordement selon l'une quelconque des revendications 1 à 6, caractérisé en ce que la paroi de la partie intermédiaire (30) de la chemise (24) comporte une partie épaissie délimitant ladite surface de soutien dudit manchon (16).

8. Dispositif d'assemblage bout à bout de conduits ayant des déplacements relatifs selon au moins une direction, ce dispositif formant un ensemble unitaire séparé destiné à être monté par des moyens de fixation (40) des zones d'extrémités opposées (36, 38) d'éléments de canalisation (10, 12) sur des extrémités en regard desdits conduits, caractérisé en ce qu'il comporte un dispositif de raccordement (14) desdits éléments de canalisation (10, 12) selon l'une quelconque des revendications 1 à 7.

## Patentansprüche

1. Vorrichtung zum stumpfen Verbinden von Rohrleitungselementen (10, 12), die relative Verlagerungen in mindestens einer Richtung aufweisen, mit einer Dichtungsmuffe (16) aus elastisch verformbarem Material, die eine Balgenanordnung aufweist, die dazu bestimmt ist, auf den gegenüberliegenden Endzonen (21, 22) der genannten Rohrleitungselemente (10, 12) befestigt zu werden, um deren relative Verlagerungen zu absorbieren, dadurch gekennzeichnet, daß sie außerdem eine Manschette (24) aufweist, die aus steifem Material hergestellt ist, ein in die Muffe (16) eingesetztes Leitungselement bildet und deren gegenüberliegende Endzonen (26, 28) jeweils mit einem Spiel zum Absorbieren der relativen Verlagerungen der genannten Rohrleitungselemente in ein Rohrleitungselement (10, 12) eingebaut sind, wobei die genannte Manschette (24) ein Zwischenteil (30) aufweist, das sich zwischen ihren Endzonen (26, 28) erstreckt und außen eine Unterstützungsfläche der genannten Mufffe (16) begrenzt.

2. Verbindungsvorrichtung nach Anspruch 1, dadurch gekennzeichnet, daß die gegenüberliegenden Endzonen (26, 28) der Manschette (24) jeweils axial versetzbar in einem entsprechenden Rohrleitungselement (10, 12) in Hinblick auf die Absorption der relativen, axialen Versetzungen der genannten Rohrleitungselemente (10, 12) angebracht sind.

3. Verbindungsvorrichtung nach einem der Ansprüche 1 und 2, dadurch gekennzeichnet, daß die gegenüberliegenden Endzonen (26, 28) der Manschette (24) jeweils winklig versetzbar in einem entsprechenden Rohrleitungselement (10, 12) in Hinblick auf die Absorption der relativen, radialen Versetzungen der genannten Rohrleitungselemente (10, 12) angebracht sind.

4. Verbindungsvorrichtung nach irgendeinem der vorangehenden Ansprüche, dadurch gekennzeichnet, daß mindestens die stromaufwärts gelegene Endzone der Manschette (24), wenn man die Strömungsrichtung eines Strömungsmittelproduktes in den genannten Rohrleitungselementen (10, 12) in Betracht zieht, eine konsch erweiterte Form zur Führung des genannten Strömungsmittels aufweist.

5. Verbindungsvorrichtung nach irgendeinem der Ansprüche 1 bis 4, dadurch gekennzeichnet, daß die freien, gegenüberliegenden Enden (26, 28) der Manschette (24) jeweils eine kegelstumpfförmige Außenoberfläche (34) zur Gleitbewegung auf der Innenwand eines entsprechenden Elements der Rohrleitung aufweisen.

6. Verbindungsvorrichtung nach irgendeinem der Ansprüche 1 bis 5, dadurch gekennzeichnet, daß die gegenüberliegenden Endzonen (21, 22) der Rohrleitungselemente jeweils eine Innenbohrung (32) zur Aufnahme einer entsprechenden, gegenüberliegenden Endzone (26, 28) der Manschette (24) aufweisen.

7. Verbindungsvorrichtung nach irgendeinem der Ansprüche 1 bis 6, dadurch gekennzeichnet, daß die Wand des Zwischenteils (30) der Manschette (24) einen verdickten Teil aufweist, der die genannte Unterstützungsfläche der genannten Muffe (16) begrenzt.

8. Vorrichtung zum stumpfen Verbinden von Rohrleitungselementen, die relative Verlagerungen in mindestens einer Richtung aufweisen, wobei diese Vorrichtung eine einheitliche, separate Baugruppe bildet, die dazu bestimmt ist, mittels Befestigungsmitteln (40) der gegenüberliegenden Endzonen (36, 38) der Rohrleitungselemente (10, 12) auf den zugewandten Enden der genannten Leitungen montiert zu werden, dadurch gekennzeichnet, daß sie eine Vorrichtung (14) zur Verbindung der genannten Rohrleitungselemente (10, 12) nach irgendeinem der Ansprüche 1 bis 7 aufweist.

## Claims

1. A device for end-to-end connection of pipework elements (10, 12) with relative movements in at least one direction, comprising an impervious sleeve (16), of resiliently deformable material, with a bellows unit intended to be fastened in an impervious manner to the facing end-zones (21, 22) of the said pipework elements (10, 12) to absorb their relative movements, characterised in that the device has moreover a liner (24) which is made of a rigid material forming a pipe element, is placed in the sleeve (16) and whose opposite end-zones (26, 28) are each mounted in a pipework element (10, 12) with play for absorption of the relative movements of the said pipework elements, the said liner (24) having an intermediate part (30) which extends between its end zones (26, 28) and which ouwardly delimits a surface for supporting the said sleeve (16).

2. A connecting device according to Claim 1, characterised in that the opposite end-zones (26, 28) of the liner (24) are each mounted in an axially movable manner in a corresponding pipework element (10, 12), with the purpose of absorption of the axial relative movements of the said pipework elements (10, 12).

3. A connecting device according to one of Claims I and 2, characterised in that the opposite end-zones (26, 28) of the liner (24) are each mounted in an angularly movable manner in a corresponding pipework element (10, 12), with the purpose of absorption of the radial relative movements of the said pipework elements (10, 12).

4. A connecting device according to any one of the preceding Claims, characterised in that at least the upstream end-zone of the liner (24), taking into account the direction of flow of a fluid in the said pipework elements (10, 12), has a flared form to guide the said fluid.

5. A connecting device according to any one of Claims 1 to 4, characterised in that the free opposite ends (26, 28) of the liner (24) each have a truncated outer surface (34) for sliding on the internal wall of a corresponding pipework element.

6. A connecting device according to any one of Claims 1 to 5, characterised in that the facing end-zones (21, 22) of the pipework elements each have an internal bore (32) to receive a corresponding opposite end-zone (26, 28) of the liner (24)

7. A connecting device according to any one of Claims 1 to 6, characterised in that the wall of the intermediate part (30) of the liner (24) has a thickened part delimiting the said surface for supporting the said sleeve (16).

8. A device for end-to-end assembling of pipes with relative movements in at least one direction, this device constituting a separate unitary assembly intended to be mounted, by fastening means (40) of the facing end-zones (36, 38) of pipework elements (10, 12), on facing ends of the said pipes, characterised in that this device comprises a device (14), according to any one of Claims 1 to 7, for connecting the said pipework elements (10, 12).
